# EUROPEAN PATENT SPECIFICATION

(11) **EP 2 568 188 B1**
(45) Date of publication and mention of the grant of the patent: **19.07.2017**
(21) Application number: 12250141.4
(22) Date of filing: 17.08.2012
(51) Int. Cl.: F16D 11/14

(54) **DIsconnect assembly**
Entkoppelungsvorrichtung
Ensemble de déconnexion

(30) Priority: 08.09.2011 GB 201115487
(43) Date of publication of application: 13.03.2013
(73) Proprietor: Goodrich Actuation Systems Limited, Solihull Birmingham B90 4LA (GB)
(72) Inventor: Buxton, Stephen John, Coventry West Midlands CV6 4BE (GB); Harvey, John H., Wolverhampton West Midlands Wv6 7SJ (GB)
(74) Representative: Leckey, David Herbert

(56) References cited:
- WO-A1-87/02106
- DE-C1- 19 839 154
- GB-A- 2 223 545
- US-A- 1 913 046
- US-A- 5 658 087
- US-A1- 2007 173 368

## Description

This invention relates to an assembly whereby the output of an actuator can be temporarily disconnected from a device or component normally driven by the actuator. The invention is particularly suitable for use in aerospace applications, for example in disconnection of the output of a motor and/or gearbox or other actuator from a moveable control surface.

There is a requirement for many parts of an aircraft to be regularly inspected and to be able to undertake maintenance and servicing operations in a safe and convenient manner. Such inspection, maintenance and/or servicing may require manual movement of a spoiler or other control surface to a predetermined position to allow the required procedures to be completed. Traditionally, where the actuators normally used to drive the control surface are hydraulically powered, once the pumps used to generate the hydraulic pressure necessary to drive the actuators have been shut down, the associated control valves can be moved to a position in which fluid can move around the associated hydraulic circuits, and manual movement of the flight control surfaces can be undertaken and results in displacement of the hydraulic fluid around the circuit. Whilst such displacement of the fluid is resisted to some degree, the resistance is sufficiently low that the ground operator is able to achieve the required movement.

Typically, the pumps used to generate the hydraulic pressure to drive the actuators in use are driven by an engine of the aircraft. Consequently, provided the procedures are being undertaken with the engine shut down, accidental or unexpected driving of the control surfaces by the actuators, and the associated risk of injury to the operator, is low.

There is a move to using electrically powered actuators in driving the control surfaces of an aircraft. In arrangements of this type, in order to develop the high torques required to drive the control surfaces, the output of a high speed electric motor is transmitted via a high ratio step down gearbox to the control surfaces. When is it required to undertake the above mentioned procedures, manual movement of the control surface is difficult, if not impossible, as a result of the very high resistance arising from the presence of the high ratio gearbox which has to be back-driven.

Furthermore, whilst the operator will remove power from the circuits used to drive the motor prior to undertaking the required procedures, as several operators may be undertaking work on the aircraft simultaneously there is the risk that another of the operators in the course of undertaking their tasks may inadvertently or unexpectedly apply power to the motor, and this carries the risk that the control surface may be unintentionally or unexpectedly driven for movement. Such movement could cause injury to the operator.

WO 87/0216 discloses a disconnect mechanism operable to disconnect one of a pair of motors from a drive shaft in the event of one motor failing.

GB 223545 discloses a mechanism for altering the pitch of variable guide vanes in a gas turbine engine.

It is an object of the invention, therefore, to provide a disconnect assembly whereby the output of the electrically driven motor and/or associated gearbox or other actuator can be disconnected from a device or component normally driven thereby, and so alleviate at least some of the disadvantages outlined hereinbefore.

According to the invention there is provided a disconnect assembly for an aerospace component, comprising an angularly movable input member arranged to be driven for movement by an actuator, an angularly moveable output member, and a drive member connected by a tooth formation consisting of a series of gear teeth to one of the input member and the output member for angular movement therewith and the gear teeth of the tooth formation being cooperable with teeth the other of the input member and the output member, wherein the drive member is axially movable between a drive position in which the tooth formation cooperates with both of the said one and the said other of the input member and the output member to transmit torque between the input member and the output member, and a disconnect position in which the tooth formation does not cooperate with the said other of the input member and the output member, and a latch arrangement is provided to permit latching of the drive member, wherein the latch arrangement comprises a radially moveable latch element moveable between a latching position in which it projects from the drive member and a released position, the latch element being cooperable with a first latch formation to latch the drive member in its drive position and a second latch formation to latch the drive member in its disconnect position, and a latch arrangement actuator operable to urge the latch element towards its latching position.

It will be appreciated that when the drive member is in the drive position, the output of the actuator, such as a motor and/or gearbox, is transmitted to a device or component driven, in use, by the actuator. When inspection, maintenance and/or servicing operations are to be undertaken, movement of the drive member to the disconnect position prevents motor drive being transmitted to the device or component. As a result, the inspection, maintenance and/or servicing operations can be undertaken safely without risk of accidental or unexpected driving of the motor being transmitted to the device or component. Furthermore, the device or component is able to be moved manually without requiring back-driving of the motor and/or gearbox, thus movement of the device or component to a predetermined position to allow the operations to be undertaken can be achieved relatively easily.

The actuator conveniently comprises an axially movable shaft provided with a ramp formation. The shaft is preferably spring biased towards a position in which it urges the latch member towards the latching position. The latch element may comprise a ball.

The formation provided on the drive member is preferably a series of gear teeth. The input member is preferably provided with a toothed recess, the teeth of which are cooperable with the teeth of the formation to transmit drive between the input member and the drive member. Preferably the teeth are non-uniformly spaced so as to ensure that the drive member and input member occupy a predetermined angular alignment when the drive member is in its drive position. By way of example, a double tooth may be provided.

The invention will further be described, by way of example, with reference to the accompanying drawings, in which:

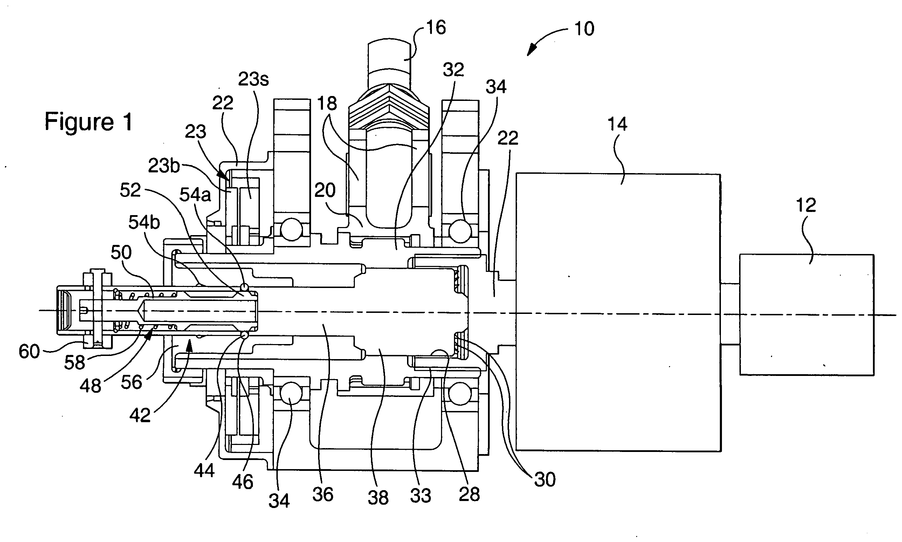

Figure 1 is a sectional view of a disconnect assembly in accordance with one embodiment of the invention; and

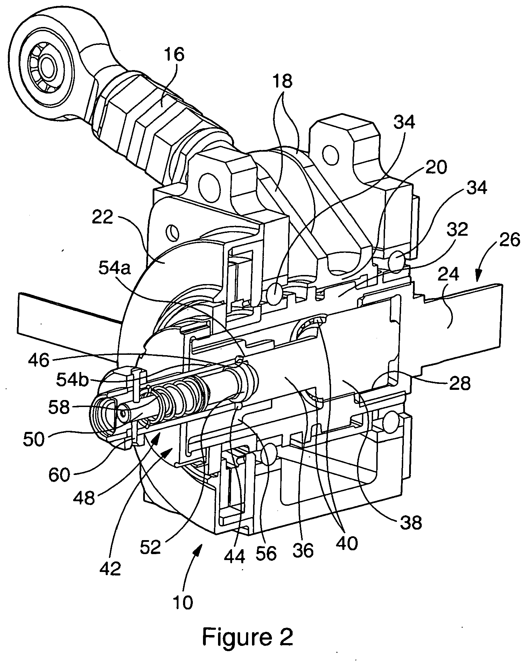

Figure 2 is a perspective view, partly in section, illustrating the disconnect assembly.

Referring to the accompanying drawings there is illustrated a disconnect assembly 10 for use in controlling the transmission of drive between an actuator in the form of a
motor 12 and associated gearbox 14 and a device or component to be driven by the motor 12. The precise form of the motor 12 and gearbox 14 is not of importance to the invention, and so will not be described in further detail other than to note that the gearbox 14 will typically be a high gear ratio step down gearbox and the motor will typically be a high speed electrically powered motor. In this case, the device or component takes the form of a link arm 16 connected, in use, to a flight control surface (not shown). Movement of the link arm 16 drives the flight control surface for movement. The link arm 16 is pivotally connected to a pair of knuckles 18 provided on a cam sleeve 20 which is supported for angular movement relative to a housing 22.

The disconnect assembly 10 comprises an input member 24 in the form of a shaft, an end 26 of which is splined and arranged to cooperate with corresponding spline formations (not shown) associated with an output of the gearbox 14 to be driven thereby. The opposite end of the input member 24 is of cupped form, defining a recess 28 provided on its inner surface with a formation in the form of a series of gear teeth 30. The disconnect assembly 10 further comprises an output member 32 in the form of a sleeve supported for angular movement within the housing 22 by bearings 34. The cam sleeve 20 is mounted upon the output member 32 so as to be supported by and movable with the output member 32. Angular movement between the output member 32 and cam sleeve 20 is prevented or resisted by cooperation between toothed formations provided thereon. It will be appreciated, therefore, that the cam sleeve 20 is supported for angular movement relative to the housing 22 by the output member 32 and bearings 34.

At one end, the output member 32 encircles part of the input member 24, a suitable bush 33 being provided therebetween. Contact between these parts of the disconnect assembly 10 maintains alignment between the input and output members 24, 32.

Within the output member 32 is located a drive member 36 in the form of a shaft having a region 38 formed with a formation in the form of a series of gear teeth 40 shaped so as to permit cooperation thereof with the teeth 30 of the input member 24. The gear teeth 40 further cooperate with corresponding gear teeth formations formed internally of the output member 32. The drive member 36 is axially moveable between a drive position in which the teeth 40 cooperate with both the teeth 30 of the input member 24 and with the teeth of the output member 32, transmitting torque between the input member 24 and the output member 32, and a disconnect position in which the teeth 40 are withdrawn from the teeth 30 of the input member 24 and so drive torque is no longer transmitted between the input member 24 and the output member 32. In the disconnect position, the teeth 40 of the drive member 36 remain in mating engagement with the teeth of the output member 32. Whilst a single, elongate set of teeth 40 are present in the arrangement shown, distinct formations for cooperation with the teeth 30 of the input member 24 and the teeth of the output member 32 may be provided. Furthermore, the formations of the input, drive and output members 24, 32, 36 need not necessarily take the form of gear teeth.

The teeth 40, and corresponding teeth 30 of the input member 24 and those of the output member 32 are conveniently non-uniformly spaced, for example a double tooth may be provided, with the result that engagement between the teeth 40 of the drive member 36 and the teeth 30 of the input member 24 may only occur in a single relative angular orientation.

A latch arrangement 42 is provided to resist undesired axial movement of the drive member 36. In the embodiment illustrated, the latch arrangement 42 is operable to latch the drive member 36 in both its drive position and its disconnect position. However, other arrangements may be possible without departing from the scope of the invention.

The latch arrangement 42, in this embodiment, comprises a series of latch elements 44 in the form of balls which are located within respective passages 46 provided in a hollow part of the drive member 36. The latch elements 44 are able to move radially under the control of an actuator 48. The actuator 48 comprises a flanged shaft 50 located within the hollow part of the drive member 36, a ramped flange 52 of the actuator 48 being cooperable with the latch elements 44. In the orientation shown, the flange 52 holds the latch elements 44 in a radially outer, latched, position in which they are partially received within one or other of a pair of latch formations in the form of pockets 54 (depending upon the axial position of the drive member 36) provided in a latching sleeve 56 encircling the hollow part of the drive member 36 to resist axial movement of the drive member 36. From the position shown, movement of the actuator 48 to the left results in the flange 52 occupying a position in which it no longer holds the latch elements 44 in their outer, latched position, allowing them to move radially inwards to a released position in which they no longer cooperate with the pockets 54 and so allow axial movement of the drive member 36. The actuator 48 is biased by a spring 58 towards the latched position. It will be appreciated that when in the released position, the biasing of the actuator 48 towards the latched position, in combination with the ramped nature of the flange 52 results in the latch elements 44 being urged radially outwards towards their latched position.

A pin 60 extending through the actuator 48 and through a slot formed in the drive member 36 allows manual manipulation of the actuator 48.

As shown, two pockets 54 are provided, and they are positioned so as to permit latching of the drive member 36 in both its drive position and in its disconnect position.

Within the housing 22 is located an angular position sensor 23 such as an inductive rotary encoder to permit monitoring of the angular position of the output member 32, and thus of the position of the link arm 16 and surface connected thereto. Whilst the sensor 23 may take a range of forms, in the arrangement illustrated it includes a fixed or static plate 23a rigidly secured to the housing 22 and a moving plate 23b arranged to move with the output member 32.

In use, the drive member 36 is normally latched in its drive position with the result that torque is transmitted between the input and output members 24, 32, and so the position of the link arm 16 is controlled by the motor 12. By appropriate control over the operation of the motor 12, the link arm 16 and a control surface connected thereto, in use, can be moved to and held in a desired position.

During maintenance and servicing, if desired, the transmission of torque between the input and output members 24, 32 can be interrupted by moving the drive member 36 to its disconnect position. This is achieved by moving the actuator 48 to its released position by manipulation of the pin 60. With the actuator 48 in this position, the latch elements 44 are able to move radially inwards, out of the pocket 54a with the result that the drive member 36 is no longer latched against axial movement. Once the latch arrangement 42 has been released in this manner, the drive member 36 can be moved, manually, to its released position disengaging the teeth 40 thereof from the teeth 30 of the input member 24. Once in the disconnect position, the drive member 36 is latched against movement by the latch arrangement 42, with the latch elements 44 cooperating with the pocket 54b.

In the disconnect position, contact may be maintained between the input member 24, output member 32 and bush 33, thereby ensuring that whilst drive between the input and output members 24, 32 is interrupted, alignment of these parts is maintained.

With the drive member 36 in the disconnect position, the control surface connected to the link arm 16 can be moved to a desired position, and locked in that position, without requiring the gearbox 14 and motor 12 to be moved. The load that must be applied thereto to achieve movement thereof during the maintenance and servicing operation is considerably reduced as there is no need to back-drive the high ratio gearbox 14. The provision of a known hand-wind device to achieve the desired movement, providing sufficient torque to back-drive the motor and gear-box thereof, can thus be avoided. Consequently, a simple alternative to the use of a hand-wind arrangement is provided whilst allowing weight savings to be made compared to arrangements in which such a mechanism is permanently fitted. Furthermore, should the motor 12 be accidentally or unexpectedly driven, the operation of the motor 12 will not be transmitted to the link arm 16 and so the risk of injury whilst undertaking such operations is much reduced. The latch arrangement 42 serves to prevent accidental return of the drive member 36 to its drive position.

The disconnect assembly 10 is of self-contained form and requires the use of no external tooling in the operation thereof. It therefore is simple and convenient to use.

One known technique for moving the control surface during such operations is to use low power energisation of the motor to drive the control surface to the desired position. With such arrangements unintended or unexpected full energisation of the motor runs the risk of injury to an operator conducting the procedures. As, in accordance with the invention, motor drive is disconnected, but movement of the control surface is still possible in a simple and convenient manner, these safety risks and disadvantages with this type of known arrangement are reduced or overcome.

After completion of the maintenance and servicing operations, the drive member 36 is returned to its drive position by releasing the latch arrangement 42 and moving the drive member 36 to reengage the teeth 40 thereof with the teeth 30 of the input member 24. As the teeth 30, 40 will only engage with one another in a single relative angular orientation, this requires the control surface and link arm 16 to be returned to the position they were occupying prior to disconnection, and ensures correct alignment of the motor 12 with the control surface. Appropriate shaping of the leading edges of the teeth 30, 40 may be used to assist in reengagement thereof. Once the drive member 36 is in the drive position, the latch arrangement 42 will reengage, latching the drive member 36 against axial movement and so avoiding undesired release or disconnection of drive transmission through the disconnect arrangement.

Whilst the description hereinbefore is of one specific embodiment, it will be appreciated that the invention may be modified in a number of ways without departing from the scope of the invention.

## Claims

1. A disconnect assembly for an aerospace component, comprising an angularly movable input member (24) arranged to be driven for movement by an actuator, an angularly moveable output member (32), and a drive member (36) connected by a tooth formation (40) consisting of a series of gear teeth to one of the input member (24) and the output member (32) for angular movement therewith and the gear teeth of the tooth formation (40) being cooperable with teeth (30) on the other of the input member (24) and the output member (32),
wherein the drive member (36) is axially movable between a drive position in which the tooth formation (40) cooperates with both of the said one and the said other of the input member (24) and the output member (32) to transmit torque between the input member (24) and the output member (32), and a disconnect position in which the tooth formation (40) does not cooperate with the said other of the input member (24) and the output member (32), **characterised in that** a latch arrangement (42) is provided to permit latching of the drive member (36), wherein the latch arrangement (42) comprises a radially moveable latch element (44) moveable between a latching position in which it projects from the drive member (36) and a released position, the latch element (44) being cooperable with a first latch formation (54a) to latch the drive member (36) in its drive position and a second latch formation (54b) to latch the drive member (36) in its disconnect position, and a latch arrangement actuator (48) operable to urge the latch element (44) towards its latching position.

2. An assembly as claimed in Claim 1, wherein the latch arrangement actuator (48) comprises an axially movable shaft (50) provided with a ramp formation (52).

3. An assembly as claimed in Claim 2, wherein the shaft (50) is spring biased towards a position in which it urges the latch member (44) towards the latching position.

4. An assembly as claimed in Claim 1, wherein the input member (24) is provided with a toothed recess, the teeth (30) of which are cooperable with the teeth (40) of the drive member (36) to transmit drive between the input member (24) and the drive member (36).

5. An assembly as claimed in Claim 4, wherein the teeth (38, 40) are non-uniformly spaced so as to ensure that the drive member (36) and input member (24) occupy a predetermined angular alignment when the drive member (36) is in its drive position.

6. An assembly as claimed in Claim 5, wherein the non-uniform spacing is achieved by the provision of a double tooth.

## Patentansprüche

1. Entkoppelungsvorrichtung für eine Raumfahrtkomponente, umfassend ein winklig bewegbares Eingangsglied (24), das dazu angeordnet ist, zur Bewegung durch einen Aktor angetrieben zu werden, ein winklig bewegbares Ausgangsglied (32) und ein Antriebsglied (36), das durch eine Zahnformation (40), die aus einer Reihe von Verzahnungen besteht, mit einem von dem Eingangsglied (24) und dem Ausgangsglied (32) für eine Winkelbewegung damit verbunden ist und die Verzahnungen der Zahnformation (40) mit Zähnen (30) auf dem anderen von dem Eingangsglied (24) und dem Ausgangsglied (32) zusammenwirken können,
wobei das Antriebsglied (36) zwischen einer Antriebsposition, in der die Zahnformation (40) mit beiden von dem einen und dem anderen von dem Eingangsglied (24) und dem Ausgangsglied (32) zusammenwirkt, um Drehmoment zwischen dem Eingangsglied (24) und dem Ausgangsglied (32) zu übertragen, und einer Entkoppelungsposition, in der die Zahnformation (40) nicht mit dem anderen von dem Eingangsglied (24) und dem Ausgangsglied (32) zusammenwirkt, axial bewegbar ist
**dadurch gekennzeichnet, dass**
eine Verriegelungsanordnung (42) bereitgestellt wird, um ein Verriegeln des Antriebsglieds (36) zu ermöglichen, wobei die Verriegelungsanordnung (42) ein radial bewegbares Verriegelungsglied (44), das zwischen einer Verriegelungsposition, in der es von dem Antriebsglied (36) vorsteht, und einer Freigabeposition bewegbar ist, wobei das Verriegelungsglied (44) mit einer ersten Verriegelungsformation (54a), um das Antriebsglied (36) in seiner Antriebsposition zu verriegeln, und einer zweiten Verriegelungsformation (54b), um das Antriebsglied (36) in seiner Entkoppelungsposition zu verriegeln, zusammenwirken kann, und einen Verriegelungsanordnungsaktor (48) umfasst, der betätigbar ist, um das Verriegelungsglied (44) in Richtung seiner Verriegelungsposition zu drängen.

2. Vorrichtung nach Anspruch 1, wobei der Verriegelungsanordnungsaktor (48) eine axial bewegbare Welle (50) umfasst, die mit einer Rampenformation (52) versehen ist.

3. Vorrichtung nach Anspruch 2, wobei die Welle (50) mit einer Feder in Richtung einer Position vorgespannt ist, in der sie das Verriegelungsglied (44) in Richtung der Verriegelungsposition drängt.

4. Vorrichtung nach Anspruch 1, wobei das Eingangsglied (24) mit einer gezahnten Ausnehmung bereitgestellt wird, deren Zähne (30) mit den Zähnen (40) des Antriebsglieds (36) zum Übertragen eines Antriebs zwischen dem Eingangsglied (24) und dem Ausgangslied (36) zusammenwirken können.

5. Vorrichtung nach Anspruch 4, wobei die Zähne (38, 40) ungleichmäßig beabstandet sind, um dadurch sicherzustellen, dass das Antriebsglied (36) und das Eingangsglied (24) eine vorbestimmte Winkelausrichtung einnehmen, wenn das Antriebsglied (36) in seiner Antriebsposition ist.

6. Vorrichtung nach Anspruch 5, wobei der ungleichmäßige Abstand durch die Bereitstellung eines Doppelzahns erreicht wird.

## Revendications

1. Ensemble de déconnexion pour un composant aérospatial, comprenant un élément d'entrée à déplacement angulaire (24) conçu pour être entraîné en mouvement par un actionneur, un élément de sortie à déplacement angulaire (32), et un élément d'entraînement (36) connecté par une formation de dents (40) constituée d'une série de dents d'engrenage à l'un parmi l'élément d'entrée (24) et l'élément de sortie (32) pour un déplacement angulaire de ceux-ci et les dents d'engrenage de la formation de dents (40) pouvant coopérer avec des dents (30) sur l'autre parmi l'élément d'entrée (24) et l'élément de sortie (32),
dans lequel l'élément d'entraînement (36) est mobile axialement entre une position d'entraînement dans laquelle la formation de dents (40) coopère avec à la fois ledit un et ledit autre parmi l'élément d'entrée (24) et l'élément de sortie (32) pour transmettre le couple entre l'élément d'entrée (24) et l'élément de sortie (32), et une position de déconnexion dans laquelle la formation de dents (40) ne coopère pas avec ledit autre parmi l'élément d'entrée (24) et l'élément de sortie (32),
**caractérisé en ce que**
un dispositif de verrouillage (42) est prévu pour permettre un verrouillage de l'élément d'entraînement (36), dans lequel le dispositif de verrouillage (42) comprend un élément de verrouillage à déplacement radial (44) mobile entre une position de verrouillage dans laquelle il fait saillie depuis l'élément d'entraînement (36) et une position libérée, l'élément de verrouillage (44) pouvant coopérer avec une première formation de verrouillage (54a) pour verrouiller l'élément d'entraînement (36) dans sa position d'entraînement et une seconde formation de verrouillage (54b) pour verrouiller l'élément d'entraînement (36) dans sa position de déconnexion, et un actionneur de dispositif de verrouillage (48) servant à pousser l'élément de verrouillage (44) vers sa position de verrouillage.

2. Ensemble selon la revendication 1, dans lequel l'actionneur de dispositif de verrouillage (48) comprend un arbre mobile axialement (50) comportant une formation de rampe (52).

3. Ensemble selon la revendication 2, dans lequel l'arbre (50) est sollicité par ressort vers une position dans laquelle il pousse l'élément de verrouillage (44) vers la position de verrouillage.

4. Ensemble selon la revendication 1, dans lequel l'élément d'entrée (24) comporte un évidement denté, dont les dents (30) peuvent coopérer avec les dents (40) de l'élément d'entraînement (36) pour transmettre un entraînement entre l'élément d'entrée (24) et l'élément d'entraînement (36).

5. Ensemble selon la revendication 4, dans lequel les dents (38, 40) sont espacées de manière non uniforme de sorte à assurer que l'élément d'entraînement (36) et l'élément d'entrée (24) occupent un alignement angulaire prédéterminé lorsque l'élément d'entraînement (36) est dans sa position d'entraînement.

6. Ensemble selon la revendication 5, dans lequel l'espacement non uniforme est obtenu par la disposition d'une dent double.
